**Europäisches Patentamt**

**European Patent Office**

**Office européen des brevets**

(19)

(11) Veröffentlichungsnummer: **0 239 879 B1**

## EUROPÄISCHE PATENTSCHRIFT

(12)

(45) Veröffentlichungstag der Patentschrift: **02.09.92**

(51) Int. Cl.5: **B23H 7/10**

(21) Anmeldenummer: **87103972.3**

(22) Anmeldetag: **18.03.87**

(54) **Stromzuführung für eine drahtförmige Elektrode einer Elektroerosionsmaschine.**

(30) Priorität: **02.04.86 DE 3611001**

(43) Veröffentlichungstag der Anmeldung:
**07.10.87 Patentblatt 87/41**

(45) Bekanntmachung des Hinweises auf die
Patenterteilung:
**02.09.92 Patentblatt 92/36**

(84) Benannte Vertragsstaaten:
**CH DE FR GB IT LI LU SE**

(56) Entgegenhaltungen:

**PATENT ABSTRACTS OF JAPAN, Band 6, Nr. 263 (M-181)[1141], 22. Dezember 1982; & JP-A-57 156 127 (MITSUBISHI DENKI K.K.) 27-09-1982**

(73) Patentinhaber: **AG für industrielle Elektronik AGIE Losone bei Locarno**

**CH-6616 Losone/Locarno(CH)**

(72) Erfinder: **Levy, Gideon, Dr.**
**Via Locarno 52**
**CH-6616 Losone(CH)**
Erfinder: **Budin, Josef**
**Via Cadogno 3**
**CH-6648 Minusio(CH)**

(74) Vertreter: **EGLI-EUROPEAN PATENT ATTORNEYS**
**Widenmayerstrasse 5**
**W-8000 München 22(DE)**

**Beschreibung**

Die Erfindung bezieht sich auf eine Stromzuführung für eine drahtförmige Elektrode einer Eleketroerosionsmaschine gemäß dem Oberbegriff des Patentanspruches 1.

Eine Stromzuführung dieser Art ist aus der JP-A-57-156 127 bekannt.

Feststehende Stromzuführungen, an denen sich die Drahtelektrode entlang bewegt, sind allgemein bekannt und beispielsweise auch in der EP-A1-0 128 958 oder der JP-OS 56-76 334 beschrieben.

Bei den bekannten Stromzuführungen dieser Art schneidet sich der Draht in die Stromzuführung ein, wodurch die bisher verwendeten Stromzuführungen relativ kurze Standzeiten hatten. Sie mußten nach relativ kurzer Zeit neu ausgerichtet werden, damit der Draht nicht in einer eingeschnittenen Kerbe läuft oder sie mußten relativ oft ausgewechselt werden.

In der JP-OS 60-167 720 wurde zur Lösung dieses Problemes vorgeschlagen, die Stromzuführung aus superhartem, elektrisch leitfähigem Material herzustellen und in diesem eine Führungsrinne für den Draht vorzusehen.

In der DE-OS 31 22 205 wurden statt dessen eine rotierende Stromzuführung vorgeschlagen, bei der die Rotationsachse senkrecht zum Draht steht und somit ein tangential gleitender elektrischer Kontakt hergestellt wird.

Eine Stromzuführung für eine Drahtschneidemaschine soll folgende vier Forderungen erfüllen:

1. Sie soll einen guten elektrischen Kontakt sicherstellen;
2. sie soll verschleißarm sein und damit eine lange Standzeit haben;
3. sie soll den Draht in gewissem Umfange führen und
4. sie soll Schwingungen des Drahtes dämpfen.

Bei den aus EP-A-128 958 oder JP-A-56-76 334 bekannten Stromzuführungen ist die Verschleißarmut nicht gegeben. Zusätzlich tritt der Nachteil auf, daß bei tieferen, vom Draht eingeschnittenen Kerben ein automatisches Drahteinfädeln nach einem Drahtbruch erschwert ist.

Bei der rotierenden Stromzuführung der DE-OS 31 22 205 sind dagegen die obigen Forderungen Nr. 3 und 4 nicht erfüllt, da der tangentiale Gleitkontakt an der Stirnseite der sich drehenden, zylindrischen Stromzuführung keinerlei Führung und Dämpfung bewirken kann, im Gegenteil, sogar unerwünschte Drahtschwingungen erregt werden können. Die Stromzuführung der JP-OS 60-167 720 mit dem superharten Material und der Führungsrinne erfüllt zwar obige Forderungen Nr. 2 und 3. Jedoch ist die elektrische Leitfähigkeit von Hartmetallen relativ schlecht im Vergleich zu guten Leitmetallen wie Kupfer etc. Darüber hinaus ist bei dem superharten Metall die Kontaktfläche zwischen Draht und Stromzuführung sehr klein. Es findet nahezu nur eine Linienberührung statt. Auch die dort vorgesehene Führungsrinne bringt keine wesentliche Verbesserung. Bildet man die Führungsrinne als V-förmige Rinne aus, so berührt der Draht (mit kreisförmigen Querschnitt) diese Rinne an zwei Linien. Gestaltet man die Führungsrinne U-förmig, so erhält man nur dann eine größere Kontaktfläche, wenn der Kreisbogen der Führungsrinne exakt mit dem Drahtdurchmesser übereinstimmt. Für jeden Drahtdurchmesser müßte man daher eine eigene Führungsrinne vorsehen. Darüber hinaus erfüllt diese Drahtführung auch nicht die Forderung Nr. 4 nach der guten Dämpfung. Schließlich muß die vorgefertigte Führungsrinne exakt gegenüber dem Draht ausgerichtet werden.

Aus der JP-A-57-156 127 ist eine Elektroerosionsmaschine bekannt, wobei das auf die Drahtelektrode die Spannung aufbringende Stromanschlußelement als Gesamtkörpen aus einem harten rostbeständigen Leitermetall besteht oder die Oberfläche des Leitermetalls mit einem harten rostbeständigen Leitermetall beschichtet ist.

Aufgabe der Erfindung ist es, die Stromzuführung der eingangs genannten Art dahingehend zu verbessern, daß sie gleichzeitig folgende vier Forderungen erfüllt:

1. guten elektrischen Kontakt
2. Verschleißarmut
3. gute Führung des Drahtes und
4. Dämpfung von Drahtschwingungen.

Diese Aufgabe wird durch die im Patentanspruch 1 angegebenen Merkmale gelöst. Vorteil hafte Ausgestaltungen und Weiterbildungen der Erfindung sind den Unteransprüchen zu entnehmen.

Kurz zusammengefaßt besteht die Stromzuführung nach der Erfindung aus einem harten Kern und einem darüberliegenden Überzug aus elektrisch leitfähigem, relativ zum Kern weicherem Material.

Der Draht wird sich in relativ kurzer Zeit in den weicheren Überzug eine seiner Kontur angepaßte Rille einschneiden, die eine relativ große Berührungsfläche zwischen Draht und Stromzuführung bildet, womit ein guter elektrischer Kontakt sichergestellt ist. Weiterhin wirkt diese eingeschnittene Rille als präzise Führung, die auch gute Dämpfungseigenschaften hat. Sobald die vom Draht eingeschnittene Rille den harten Kern erreicht hat, kann sich der Draht praktisch nicht mehr tiefer in das Material einschneiden, so daß dadurch auch die Verschleißarmut gegeben ist.

Damit sind durch die technisch sehr einfachen Maßnahmen der Erfindung die obigen vier, sich teilweise widersprechenden Forderungen erfüllt.

Als zusätzlichen Vorteil erhält man noch eine weitere Verbesserung der elektrischen Eigenschaften, da bei den beim Erodieren verwendeten hohen elektrischen Strömen und/oder Frequenzen der elektrischen Impulse bereits ein spürbarer Skineffekt an der Stromzuführung auftritt. Der Hauptanteil des elektrischen Stromes fließt damit in der Oberfläche des elektrisch gut leitenden Überzuges, wobei zusätzlich sichergestellt ist, daß der Draht auch stets dort in elektrischem Kontakt mit der Stromzuführung ist und nicht etwa in tieferen, geringere Stromanteile führenden Schichten.

Damit ist es sogar möglich, den Kern aus elektrisch nicht leitendem Material zu machen, beispielsweise aus einer extrem verschleißarmen Keramik.

Die Dicke des weicheren Überzuges sollte nicht größer sein als der halbe Durchmesser des Drahtes. Geringere Dicken haben jedoch ebenfalls bereits hervorragende Ergebnisse gebracht, so daß die Dicke des Überzuges zwischen 5 und 500 $\mu$m liegt, vorzugsweise jedoch zwischen 10 und 20 $\mu$m.

Im folgenden wird die Erfindung anhand von Ausführungsbeispielen im Zusammenhang mit der Zeichnung ausführlicher erläutert. Es zeigt.

Fig. 1 eine perspektivische Ansicht der Stromzuführung nach der Erfindung;

Fig. 2 einen Längsschnitt der Stromzuführung der Fig. 1;

Fig. 3 einen ähnlichen Längsschnitt eines zweiten Ausführungsbeispieles der Erfindung und

Fig. 4 ein Diagramm von Verschleißkurven der Stromzuführung nach der Erfindung im Vergleich zu Stromzuführungen des Standes der Technik.

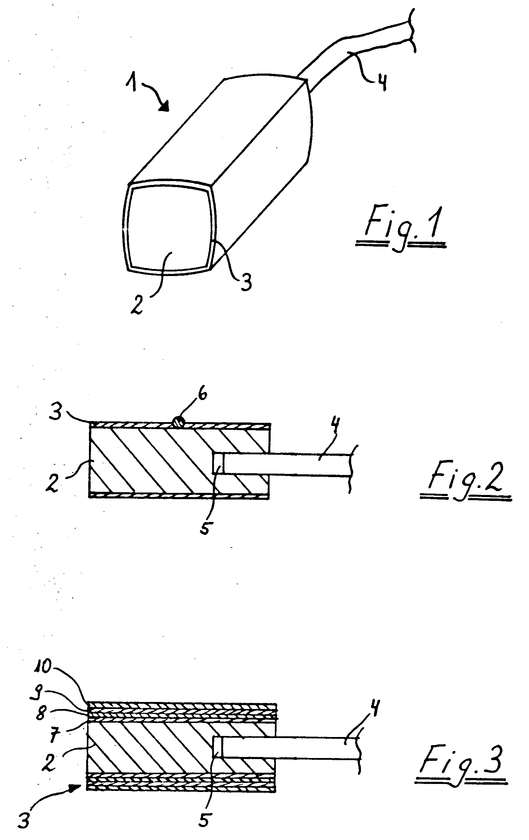

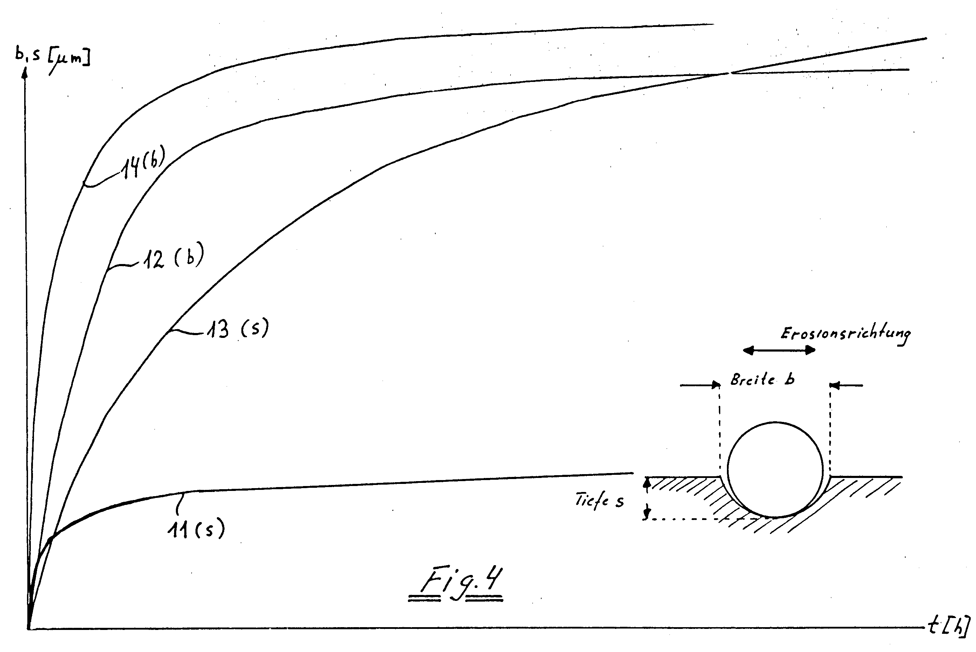

Die äußere Form der Stromzuführung 1 der Fig. 1 und 2 entspricht dem Stand der Technik. Die Stromzuführung ist hier ein länglicher, quaderförmiger Körper mit abgerundeten, balligen Seitenflächen. Nach der Erfindung besteht der Kern 2 nun aus sehr hartem Material, beispielsweise dem Hartmetall "G 30" oder gesinterten Metallcarbiden wie Wolframcarbid oder Titancarbid. Auch sind für den Kern 2 Keramikwerkstoffe und insbesondere elektrisch leitfähige Keramikwerkstoffe möglich. Dieser Kern 2 ist zumindest an den mit einer Drahtelektrode 6 in Berührung kommenden Seitenflächen mit einem Überzug 3 aus elektrisch leitfähigem Weichmetall, beispielsweise Nickel oder Kupfer versehen. Dieser Überzug 3 hat bei einem bevorzugten Ausführungsbeispiel eine Dicke von 10 bis 20 $\mu$m. Er kann aber auch dicker sein bis ca. 500 $\mu$m. Eine Obergrenze für die Dicke des Überzuges 3 liegt etwa beim halben Durchmesser des Drahtes 6.

Im Ausführungsbeispiel der Fig. 1 bis 3 ist der Kern 2 jeweils aus elektrisch leitfähigem Material. Daher kann in eine Öffnung 5 ein Stromkabel 4 eingesetzt und beispielsweise angelötet werden.

Während des Betriebes der Elektroerosionsmaschine wird der Draht 6 angetrieben und gleitet damit über einen Teil der Oberfläche der Stromzuführung 1. Aufgrund des relativ weichen Überzuges schneidet er sich in kurzer Zeit eine defnierte Kerbe, die als Führung dient. Das darunter liegende hoch verschleißfeste Material des Kernes 2 verhindert dann eine weitere Vertiefung der Kerbe. Dadurch, daß sich der Draht "seine" Kerbe selbst schneidet, ist es auch nicht erforderlich, die Stromzuführung in der Maschine exakt gegenüber dem Draht auszurichten, wie es bei der eingangs genannten Stromzuführung mit vorgefertigter Führungsrinne der Fall ist.

Mit einer Stromzuführung gemäß den Fig. 1 und 2 wurden im praktischen Versuch folgende Meßergebnisse erhalten, wobei ein chemisch vernickeltes (Oberflächenhärte: HRC 67-69) Hartmetall G 30 verwendet wurde:

3

| Erosionsstunden | Schnitttiefe (µm) | Schnittbreite (µm) |
|---|---|---|
| nach 2 Stunden | 5 | 270 |
| nach 15 Stunden | 8 | 300 |
| nach 25 Stunden | 10 | 310 |
| . | | |
| . | | |
| . | | |
| nach 82 Stunden | 10 | 320 |

Diese Meßergebnisse zeigen, daß der Draht nach ca. 15 bis 25 Stunden bereits am Hartmetall angekommen ist und nach 25 Stunden praktisch kein weiterer Verschleiß mehr feststellbar ist. Die Schichtdicke des weicheren Überzuges betrug 10 µm.

Die obigen Meßwerte wurden an der unteren Stromzuführung gemessen. An der oberen Stromzuführung wurde dagegen innerhalb der Meßzeit nur ein sehr geringer Verschleiß festgestellt. Dies entspricht auch den praktischen Beobachtungen beim Stand der Technik, wo der Verschleiß der unteren Drahtführung erheblich größer ist als der der oberen Drahtführung. Dies ist damit zu erklären, daß der Draht nach Durchlaufen der Arbeitszone sehr viel rauher geworden ist und damit als "Säge" wirkt. Zusätzlich tritt beim Drahterodieren von Hartmetall noch der Effekt auf, daß die aufgerauhte Drahtoberfläche mit Hartmetallpartikeln, insbesondere sehr harten Carbiden teilweise zugesetzt ist, die eine höhere Abriebwirkung haben als das Material des Drahtes.

Fig. 3 zeigt ein anderes Ausführungsbeispiel der Erfindung. Dort ist der Überzug 3 aus mehreren, übereinanderliegenden Schichten 7 bis 10 zusammengesetzt. Beispielsweise sind abwechselnd jeweils eine Kupfer- und eine Nickelschicht vorgesehen. Dieser Mehrschichtenaufbau ist besonders dann von Vorteil, wenn ein Überzugsmaterial nur schlecht an dem Material des Kernes haftet und wenn eine größere Schichtdicke des Überzuges gewünscht ist. Würde man nämlich bei bestimmten Materialien des Überzuges die Schichtdicke zu groß wählen, so besteht die Gefahr des Abblätterns.

Fig. 4 zeigt Verschleißkurven der unteren Stromzuführung. Die Kurve 11 bezeichnet die Tiefe der vom Draht in die Stromzuführung geschnittenen Kerbe in Abhängigkeit von der Erosionszeit bei einer Stromzuführung nach der Erfindung. Die Kurve 12 bezeichnet die Breite der vom Draht geschnittenen Kerbe in Abhängigkeit von der Zeit bei dem Ausführungsbeispiel der Erfindung. Die Kurven 13 und 14 bezeichnen in entsprechender Weise Tiefe und Breite der Kerbe bei einer Stromzuführung gemäß dem Stand der Technik, die vollständig aus Wolfram aufgebaut war.

In allen Fällen wurde ein gerader Schnitt in der mit einem Pfeil gekennzeichneten Erosionsrichtung durchgeführt.

Die Kurven lassen deutlich erkennen, daß bei der Erfindung der Verschleiß drastisch reduziert ist und damit die Standzeit der Stromzuführung erheblich verlängert wurde.

**Patentansprüche**

1. Stromzuführung für eine drahtförmige Elektrode (6) einer Elektroerosionsmaschine, welche als stillstehender Schleifer ausgebildet ist, der einen aus einem harten, hoch verschleißfestem Material bestehenden Kern (2) mit einem Überzug (3) aus elektrisch leitfähigem Material besitzt,
dadurch gekennzeichnet,
daß der Überzug (3) aus einem Weichmetall besteht, das so weich ist, daß die drahtförmige Elektrode (6) bei einer Überzugsdicke von 10 um nach längstens 25 Betriebsstunden eine Kerbe in den Überzug (3) eingeschnitten hat, deren Grund am Kern (2) liegt.

2. Stromzuführung nach Anspruch 1, dadurch gekennzeichnet,
daß der Kern (2) aus Hartmetall ist, vorzugsweise aus gesinterten Carbiden wie Wolframcarbid oder Titancarbid.

3. Stromzuführung nach Anspruch 1, dadurch gekennzeichnet,
daß der Kern (2) aus Keramik ist, vorzugsweise aus elektrisch leitfähiger Keramik.

4. Stromzuführung nach einem der Ansprüche 1 bis 3, dadurch gekennzeichnet,
daß das Weichmetall, aus dem der Überzug (3) besteht, Nickel oder Kupfer ist.

5. Stromzuführung nach einem der Ansprüche 1 bis 4, dadurch gekennzeichnet,
daß der Überzug (3) eine Dicke von 5 bis 500 $\mu$m, vorzugsweise von 10 bis 20 $\mu$m aufweist.

6. Stromzuführung nach einem der Ansprüche 1 bis 5, dadurch gekennzeichnet,
daß der Überzug (3) aus mehreren Schichten (7 bis 10) unterschiedlicher Weichmetalle besteht.

7. Stromzuführung nach Anspruch 6, dadurch gekennzeichnet,
daß der Überzug (3) abwechselnd aus Schichten (7 bis 10) zweier verschiedener Weichmetalle besteht.

**Claims**

1. A power supply conductor for a wire-shaped electrode (6) of a spark erosion machine, which is constructed as a stationary slider with a core (2) composed of a hard, highly wear-resistant material and having a cover (3) made of an electrically conductive material, characterized in that the cover (3) is composed of a soft metal which is so soft that with a cover thickness of 10 $\mu$m the wire-shaped electrode (6) has cut a groove into the cover (3) after at most 25 operating hours, the base of this groove lying on the core (2).

2. A power supply conductor in accordance with Claim 1, characterized in that the core (2) is made of hard metal, preferably of sintered carbides such as tungsten carbide or titanium carbide.

3. A power supply conductor in accordance with Claim 1, characterized in that the core (2) is made of ceramic, preferably of electrically conductive ceramic.

4. A power supply conductor in accordance with any one of Claims 1 to 3, characterized in that the soft metal forming the cover (3) is nickel or copper.

5. A power supply conductor in accordance with any one of Claims 1 to 4, characterized in that the cover (3) is between 5 and 500 $\mu$m thick, preferably between 10 and 20 $\mu$m.

6. A power supply conductor in accordance with any one of Claim 1 to 5, characterized in that the cover (3) is composed of a plurality of layers (7 to 10) of different soft metals.

7. A power supply conductor in accordance with Claim 6, characterized in that the cover (3) is made of alternate layers (7 to 10) of two differing soft metals.

**Revendications**

1. Alimentation en courant pour une électrode en fil (6) d'une machine d'électro-érosion, réalisée sous la forme d'un meuleur fixe qui comporte un coeur (2) en un matériau dur et à grande résistance à l'usure, avec un revêtement (3) en un matériau électriquement conducteur, caractérisée en ce que le revêtement (3) est constitué en un métal doux qui est suffisamment doux pour que l'électrode en fil (6), pour une épaisseur de revêtement de 10 $\mu$m, ait découpé après 25 heures de service au plus tard, une entaille dans le revêtement (3) dont la base atteint le noyau (2).

2. Alimentation en courant selon la revendication 1, caractérisée en ce que le noyau (2) est réalisé en métal dur, de préférence en carbures frittés tels que le carbure de tungstène ou le carbure de titane.

3. Alimentation en courant selon la revendication 1, caractérisée en ce que le noyau (2) est réalisé en céramique, de préférence en céramique électriquement conductrice.

4. Alimentation en courant selon l'une des revendications 1 à 3, caractérisée en ce que le métal doux dont se compose le revêtement (3) est du nickel ou du cuivre.

5. Alimentation en courant selon l'une des revendications 1 à 4, caractérisée en ce que le revêtement (3) présente une épaisseur de 5 à 500 $\mu$m, de préférence de 10 à 20 $\mu$m.

6. Alimentation en courant selon l'une des revendications 1 à 5, caractérisée en ce que le revêtement (3) se compose de plusieurs couches (7 à 10) de différents métaux doux.

7. Alimentation en courant selon la revendication 6, caractérisée en ce que le revêtement (3) se compose alternativement de couches (7 à 10) de deux métaux doux différents.

*Fig.1*

*Fig.2*

*Fig.3*

Fig.4

EP 0 239 879 B1